(19) Europäisches Patentamt
European Patent Office
Office européen des brevets

(11) EP 4 810 458 A1

(12) **EUROPEAN PATENT APPLICATION**
published in accordance with Art. 153(4) EPC

(43) Date of publication:
**23.09.2026 Bulletin 2026/39**

(21) Application number: **24897226.7**

(22) Date of filing: **06.11.2024**

(51) International Patent Classification (IPC):
***C04B 35/66** (2006.01)* ***C04B 38/06** (2006.01)*
***F27D 1/00** (2006.01)*

(52) Cooperative Patent Classification (CPC):
**C04B 35/66; C04B 38/06; F27D 1/00**

(86) International application number:
**PCT/JP2024/039349**

(87) International publication number:
**WO 2025/115538 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.11.2023 JP 2023201872**

(71) Applicant: **Krosakiharima Corporation**
**Kitakyushu-shi, Fukuoka 806-8586 (JP)**

(72) Inventors:
- **KAMIO, Hidetoshi**
  **Kitakyushu-shi, Fukuoka 806-8586 (JP)**
- **SHIOHAMA, Michiharu**
  **Kitakyushu-shi, Fukuoka 806-8586 (JP)**

(74) Representative: **Vossius & Partner**
**Patentanwälte Rechtsanwälte mbB**
**Siebertstraße 3**
**81675 München (DE)**

# (54) REFRACTORY AND METHOD FOR PRODUCING SAME

(57) The present invention provides a refractory body capable of suppressing the occurrence of macrocracks during use, and a production method for the same. In the refractory body according to the present invention, thermally disappearing sheets and/or void spaces formed as a result of burn-out of the sheets are randomly included in a refractory microstructure primarily composed of a refractory raw material. This refractory body is produced by a method comprising a step of adding thermally disappearing sheets to a refractory raw material mixture primarily composed of a refractory raw material, and mixing them together. In the present invention, each of the sheets satisfies the following conditions: $C \leq 1$ mm; $C/A \leq 0.1$; and $0.2 \leq B/A \leq 1.0$, where: A denotes a representative length of the sheet; B denotes a maximum length as measured within a plane of the sheet in a direction orthogonal to a direction along which the representative length A is defined; and C denotes a thickness of the sheet.

【Fig.1】

A
B
(a)
A
B
(b)
A
B
(c)
A
B
(d)

A
B
(e)

EP 4 810 458 A1

## Description

TECHNICAL FIELD

The present invention relates to a refractory body used in a kiln/furnace, or a facility for processing or holding molten metal or a high-temperature substance, and to a method for producing the refractory body.

BACKGROUND ART

In such refractory bodies, except for some of them such as nozzle products for continuous casting, it may be said that suppressing the occurrence of cracks themselves is impossible with current material technology. Thus, cracks inevitably occur during use. Then, if such cracks grow, the refractory body can no longer be continuously used and comes to the end of its usable life. Therefore, suppressing the growth of cracks is useful for improving the durability of such refractory bodies.

As one technique for suppressing crack growth, there has been known a technique of incorporating defect-forming pieces into a refractory microstructure. Specifically, it is considered that such defect-forming pieces function as stress concentration sites in the refractory microstructure, and facilitate the occurrence of second and subsequent cracks after the formation of an initial crack, thereby improving a crack branching ability. Thus, it is considered that, by appropriately incorporating defect-forming pieces into a refractory microstructure, the crack branching ability is improved, and consequently, the occurrence of large cracks that would adversely affect durability of the refractory body (such large cracks will hereinafter be referred to as "macrocracks") can be suppressed.

As examples of such defect-forming pieces, i.e., pieces that function as stress concentration sites in a refractory microstructure, Reference 1 discloses a technique of incorporating wood chips, and Reference 2 discloses a technique of incorporating wood granules having a particle size of 0.2 mm to 4 mm. However, these conventional techniques of incorporating wood chips or wood granules were not sufficient to suppress the occurrence of macrocracks.

PRIOR ART DOCUMENTS

[Patent Document]

Patent Document 1: JP 2006-225195 A
Patent Document 2: JP S62-21752 B2

SUMMARY OF INVENTION

[Technical Problem]

The technical problem to be solved by the present invention is to provide a refractory body capable of suppressing the occurrence of macrocracks during use, and a production method for the refractory body.

[Solution to Technical Problem]

With a view to solving the above technical problem, the present inventors conducted repeated tests and studies on the material and shape of defect-forming pieces that function as stress concentration sites in a refractory microstructure, and consequently have found that it is effective to employ, as the material, a thermally disappearing (vanishing) material such as plastic or resin, and employ, as the shape, a thin sheet shape.

Specifically, according to one aspect of the present invention, the following refractory body is provided.

"A refractory body in which thermally disappearing sheets and/or void spaces formed as a result of burn-out of the sheets are randomly included in a refractory microstructure primarily composes of a refractory raw material, wherein each of the sheets satisfies the following conditions: $C \leq 1$ mm; $C/A \leq 0.1$; and $0.2 \leq B/A \leq 1.0$, where: A denotes a representative length of the sheet; B denotes a maximum length as measured within a plane of the sheet in a direction orthogonal to a direction along which the representative length A is defined; and C denotes a thickness of the sheet."

According to another aspect of the present invention, the following method is provided.

"A method of producing a refractory body, the method comprising a step of adding thermally disappearing sheets to a refractory raw material mixture primarily composed of a refractory raw material, and mixing them together, wherein each of the sheets satisfies the following conditions: $C \leq 1$ mm; $C/A \leq 0.1$; and $0.2 \leq B/A \leq 1.0$, where: A denotes a

representative length of the sheet; B denotes a maximum length as measured within a plane of the sheet in a direction orthogonal to a direction along which the representative length A is defined; and C denotes a thickness of the sheet."

[Advantageous Effects of Invention]

According to the present invention, it is possible to provide a refractory body capable of suppressing the occurrence of macrocracks during use, and a production method for the refractory body.

BRIEF DESCRIPTION OF THE DRAWINGS

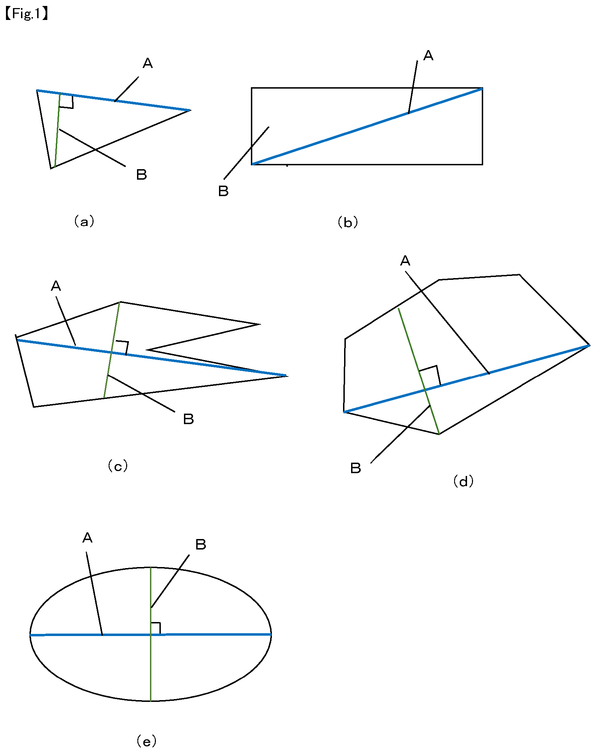

FIG. 1 is an explanatory diagram showing a representative length A and a maximum length B of a sheet used in the present invention.

DESCRIPTION OF EMBODIMENTS

The present invention provides a refractory body in which thermally disappearing sheets and/or void spaces formed as a result of burn-out of the sheets are randomly included in a refractory microstructure primarily composed of a refractory raw material. The present invention also provides a method of producing a refractory body, which comprises the step of adding thermally disappearing sheets to a refractory raw material mixture primarily composed of a refractory raw material, and mixing them together. Here, the term "refractory body" collectively refers to a monolithic refractory body and a shaped refractory body, wherein a precast block shall fall under the category of monolithic refractory bodies.

Further, in the present invention, the shape of each of the sheets satisfies the following conditions: $C \leq 1$ mm; $C/A \leq 0.1$; and $0.2 \leq B/A \leq 1.0$, where: A denotes a representative length of the sheet; B denotes a maximum length of the sheet as measured within a plane of the sheet in a direction orthogonal to a direction along which the representative length A is defined; and C denotes a thickness of the sheet.

Here, the representative length of the sheet means, in a case where the planar shape of the sheet is a triangular shape, as exemplified in FIG. 1(a), the length of one side having a longest length (hereinafter referred to as "longest side"), and means, in a case where the planar shape of the sheet is a polygonal shape having four or more sides, an elliptical shape, a round shape, or an irregular shape, as exemplified in FIGS. 1(b) to 1(e), the length of the longest line segment within the plane of the sheet. Further, as shown in FIGS. 1(a) to 1(e), a maximum length as measured within a plane of the sheet in a direction orthogonal to a direction along which the representative length A is defined is B.

It is often the case that the thickness C of the sheet is constant. However, when the sheet has variations in its thickness, an average of thicknesses measured at plural points is used as the thickness C of the sheet. The sheet is not limited to a single-layer sheet, but may be a multi-layer sheet such as a bag-shaped sheet or or a two-ply sheet. In this case, the representative length A, the maximum length B, and the thickness C shall be evaluated on the assumption that the multi-layer sheet is a single sheet.

As mentioned above, in the present invention, the shape of the sheet satisfies the following conditions: $C \leq 1$ mm, $C/A \leq 0.1$, and $0.2 \leq B/A \leq 1.0$. These conditions have been derived as a result of tests and studies conducted by the present inventors, wherein the conditions "$C \leq 1$ mm" and "$C/A \leq 0.1$" are intended to limit the sheet to a sheet having a small thickness, and the condition "$0.2 \leq B/A \leq 1.0$" is intended to excluded sheets having elongated (narrow and long) shapes. That is, it is intended to exclude a block-like (massive) shape and a string-like shape and to limit the shape of the sheet to a thin sheet-like shape.

In the present invention, the representative length A is preferably greater than 1/3 of a maximum particle size of the refractory raw material. The reason is as follows.

A boundary area between the aggregate and the matrix in the refractory microstructure is formed with a boundary layer, which is considered to function as a latent defect to exhibit a certain effect on suppression of macrocracks. Since the size of the boundary layer is determined by the particle size of the refractory raw material, the size of the latent defect depends on the maximum particle size of the refractory raw material. When the defect based on the boundary layer is simplified into an idealized defect shape such as a so-called penny-shaped crack, the size of the resulting defect cannot be directly determined, as a matter of course. Assuming an area derived by projecting the boundary layer onto a certain plane, the size of the boundary layer is considered to be approximately equal to the diameter of particles at a maximum. However, in practice, since only a portion of the boundary layer on the outer periphery of each particle has a normal that is perpendicular to a stress loading direction, the size of the boundary layer is considered to be fairly smaller than the diameter of the particle. The value "1/3" is defined as a coefficient relating to the maximum particle size of the refractory raw material. This value was obtained by experimentally researching the relationship between the maximum length of the defect-forming piece and the particle size of the refractory raw material, and organizing conditions under which cracking is mitigated.

In the present invention, the term "maximum particle size of the refractory raw material" means the maximum

particle size of the refractory raw material as measured after excluding particles having a particle size of greater than 8 mm, so-called "very coarse particles.". This is because it is difficult to ensure uniformity of such very coarse particles in the refractory microstructure, thereby making it difficult to stably improve a defect density. For this reason, in the present invention, the very coarse particles shall not be comprised in the refractory raw material. That is, in the present invention, the very coarse particles shall be added to 100% by mass of the refractory raw material as needed at a given addition rate with respect to 100% by mass of the refractory raw material, in the same manner as that for the sheets,

The material of the sheets is not particularly limited as long as it has a thermally disappearing property. In the present invention, the term "thermally disappearing property" means a property of forming a void space as a result of carbonization, decomposition, vaporization, shrinkage, or the like caused by a temperature rise during production or use. Such a material having a thermally disappearing property (i.e., thermally disappearing material) may be selected from plastic, wood chip, paper, cloth, leather, and the like. Among these, plastic is most suitable from a viewpoint of: mechanical properties, such as high strength and low elastic modulus; a relatively low softening temperature; and availability of a sheet-shaped raw material having a small thickness. The plastic, i.e., synthetic resin, may be either one of: a thermoplastic resin, such as polyethylene, polypropylene, polyvinyl chloride, polystyrene, acrylonitrile butadiene styrene, acrylonitrile styrene, polymethyl methacrylate, polyvinyl alcohol, polyvinylidene chloride, polyethylene terephthalate, or polyester; and a thermosetting resin, such as phenol, melamine, polyurethane, or epoxy. Further, a laminated sheet obtained by combining some of them may also be used.

In the present invention, any metal shall not be a thermally disappearing material.

In the present invention, the addition rate of the sheets is not particularly limited and may be appropriately determined based on common technical knowledge and the like. For example, in the case of a monolithic refractory body, the sheets may be added to 100% by mass of the refractory raw material, at an addition rate of 0.03% by mass to less than 3% by mass, preferably at an addition rate of 0.1% by mass to 2.5% by mass, with respect to 100% by mass of the refractory raw material. On the other hand, in the case of a shaped refractory body, the sheets may be added to 100% by mass of the refractory raw material, at an addition rate of 0.03% by mass to less than 0.6% by mass, preferably at an addition rate of 0.1% by mass to 0.3% by mass, with respect to 100% by mass of the refractory raw material. In the case of a shaped refractory body, a production process therefor comprises a shaping step after a step of adding the sheets to the refractory raw material mixture and mixing them together. Thus, from a viewpoint of suppressing springback during shaping, it is preferable that the upper limit of the addition rate of the sheets is set to be lower than that in the case of a monolithic refractory body. In this case, such an upper limit may also be appropriately determined based on common technical knowledge and the like.

The above-mentioned addition rate of the sheets means the addition rate of sheets each made of a thermally disappearing material and having a shape satisfying the following conditions: $C \leq 1$ mm, $C/A \leq 0.1$, and $0.2 \leq B/A \leq 1.0$ (such sheets will hereinafter be referred to as "requirement-compliant sheets"). In other words, the refractory body according to the present invention may comprise thermally disappearing sheets whose shape does not satisfy the following conditions: $C \leq 1$ mm, $C/A \leq 0.1$, and $0.2 \leq B/A \leq 1.0$ (such sheets will hereinafter be referred to as "requirement-noncompliant sheets"). The requirement-noncompliant sheets can inevitably occur during production of the requirement-compliant sheets. In this case, the requirement-noncompliant sheets will be added to the refractory raw material together with the requirement-compliant sheets. Further, when waste plastic sheets are used as materials of the requirement-compliant sheets, metal pieces and the like can be mixed therein as impurities. In this case, the metal pieces and the like will be added to the refractory raw material together with the requirement-compliant sheets. In either case, the above-mentioned addition rate of the sheets means the addition rate of the requirement-compliant sheets.

Since the present invention obtains the intended effect by means of a change in the shape of the refractory microstructure, the material composition of the refractory body is not particularly limited, and may be any of various material compositions commonly used for refractory bodies, such as an alumina-based composition, an alumina-silica-based composition, an alumina-magnesia-based composition, an alumina-silicon carbide-carbon-based composition, an alumina-spinel-based composition, an alumina-spinel-carbon-based composition, a magnesia-based composition, and a magnesia-carbon-based composition. Further, the refractory raw material is also not particularly limited, and any of various refractory raw materials commonly used for refractory bodies, such as alumina raw materials, silica raw materials, alumina-silica raw materials, magnesia raw materials, spinel raw materials, mullite raw materials, silicon carbide raw materials, and carbon raw materials, may be employed depending on the material composition of the refractory body.

In the present invention, a binder for monolithic refractory bodies, such as alumina cement, magnesia cement, Portland cement, silicates, or phosphates, shall be comprised in the refractory raw material.

On the other hand, in the present invention, an organic binder for shaped refractory bodies, such as phenolic resin, shall not be comprised in the refractory raw material, and shall be added to 100% by mass of the refractory raw material at a given addition rate, in the same manner as that for the sheets. Further, in the present invention, additives such as a dispersant and organic fibers shall also not be comprised in the refractory raw material, and shall be added to 100% by mass of the refractory raw material at a given addition rate, in the same manner as that for the sheets. The addition rates of the organic binder and the additives may be determined within the bounds of common technical knowledge.

The refractory body production method according to the present invention comprises a step of adding thermally disappearing sheets (requirement-compliant sheets) to a refractory raw material mixture primarily composed of a refractory raw material, and mixing them together. In the case of a shaped refractory body, the method comprises a shaping step after a mixing step, as described above. On the other hand, in the case of a monolithic refractory body, the monolithic refractory body may be installed typically by casting. In this case, the installation is carried out through a process comprising: a step of kneading, with water, a raw material composition for the monolithic refractory body according to the present invention; a casting step; a curing step; and a drying step. The conditions for performing each of the steps are determined within the bounds of technical common knowledge. It should be noted that the installation of the monolithic refractory body according to the present invention is not limited to casting, and may also be performed by spraying, patching, or the like.

## EXAMPLES

< Example A: Example of Monolithic Refractory Body (Part 1)>

Table 1 shows a raw material composition for a monolithic refractory body in each of Inventive Examples, and a crack index from a thermal shock test of an installed body (monolithic refractory body) of the raw material composition. Further, Table 2 shows a raw material composition for a monolithic refractor body in each Comparative Example, and the crack index from the thermal shock test of an installed body (monolithic refractory body) of the raw material composition. In Tables 1 and 2, each defect-forming piece, except for a rope, is indicated in the form of "material - thickness - representative length A × maximum length B (mm) (planar shape of the sheet)". In the column "Shape Parameters" in Tables 1 and 2, A, B, and C denote the above-mentioned representative length A, maximum length B, and thickness C, respectively, and Pmax denotes the maximum particle size of the refractory raw material. The same notation applies to Tables 3 to 7 described below.

[Table 1]

| | | Inventive Example 1 | Inventive Example 2 | Inventive Example 3 | Inventive Example 4 | Inventive Example 5 | Inventive Example 6 | Inventive Example 7 | Inventive Example 8 | Inventive Example 9 |
|---|---|---|---|---|---|---|---|---|---|---|
| Refractory raw material (mass%) | | 100 | 100 | 100 | 100 | 100 | 100 | 100 | 100 | 100 |
| Defect-forming pieces (mass%) | PE-0.15-25.5×25.5 (tetragon) | 0.03 | 0.1 | 0.2 | 0.5 | 1 | 1.5 | 2 | 2.5 | |
| | PE-0.05-9.9×9.9 (tetragon) | | | | | | | | | |
| | PE-0.4-5.7×5.7 (tetragon) | | | | | | | | | |
| | PE-0.15-2.5×2.5 (tetragon) | | | | | | | | | |
| | PE-0.1-1.7×1.7 (tetragon) | | | | | | | | | |
| | PP-0.03-44.7×30.2 (tetragon) | | | | | | | | | 0.08 |
| | PE-0.1-122.6×25.5 (tetragon) | | | | | | | | | |
| | PE-0.1-25×25 (pentagon) | | | | | | | | | |
| | PE-0.1-1×1 (pentagon) | | | | | | | | | |
| | PEs-0.045-35.4×35.4 (tetragon) | | | | | | | | | |
| Shape parameters | A(mm) | 25.5 | 25.5 | 25.5 | 25.5 | 25.5 | 25.5 | 25.5 | 25.5 | 44.7 |
| | B(mm) | 25.5 | 25.5 | 25.5 | 25.5 | 25.5 | 25.5 | 25.5 | 25.5 | 30.2 |
| | C(mm) | 0.15 | 0.15 | 0.15 | 0.15 | 0.15 | 0.15 | 0.15 | 0.15 | 0.03 |
| | C / A | 0.006 | 0.006 | 0.006 | 0.006 | 0.006 | 0.006 | 0.006 | 0.006 | 0.001 |
| | B / A | 1.00 | 1.00 | 1.00 | 1.00 | 1.00 | 1.00 | 1.00 | 1.00 | 0.68 |
| | A / (Pmax/3) | 15.274 | 15.274 | 15.274 | 15.274 | 15.274 | 15.274 | 15.274 | 15.274 | 26.793 |
| Water (mass%) | | 7.2 | 7.2 | 7.2 | 7.2 | 7.2 | 7.4 | 7.7 | 7.7 | 7.2 |
| Crack index | | 0.0105 | 0.0069 | 0.0041 | 0.0061 | 0.0042 | 0.0058 | 0.0033 | 0.0032 | 0.0114 |
| Crack index ratio | | 56.7 | 37.3 | 22.0 | 32.7 | 22.7 | 31.5 | 17.9 | 17.0 | 61.6 |

* PE: : polyethylene, PP : polypropylene, PEs: polyesters

| | | Inventive Example 10 | Inventive Example 11 | Inventive Example 12 | Inventive Example 13 | Inventive Example 14 | Inventive Example 15 | Inventive Example 16 | Inventive Example 17 | Inventive Example 18 | Inventive Example 19 |
|---|---|---|---|---|---|---|---|---|---|---|---|
| Refractory raw material (mass%) | | 100 | 100 | 100 | 100 | 100 | 100 | 100 | 100 | 100 | 100 |
| Defect-forming pieces (mass%) | PE-0.15-25.5×25.5 (tetragon) | | | | | | | | | | |
| | PE-0.05-9.9×9.9 (tetragon) | | | | | 0.08 | | | 0.02 | 0.2 | |
| | PE-0.4-5.7×5.7 (tetragon) | | | | | | 0.08 | | | | |
| | PE-0.15-2.5×2.5 (tetragon) | | | | | | | | | | 0.2 |
| | PE-0.1-1.7×1.7 (tetragon) | | | | | | | 0.08 | | | |
| | PP-0.03-44.7×30.2 (tetragon) | | | | | | | | | | |
| | PE-0.1-122.6×25.5 (tetragon) | 0,08 | | | | | | | | | |
| | PE-0.1-25×25 (pentagon) | | 0.08 | | | | | | | | |
| | PE-0.1-1×1 (pentagon) | | | 0,08 | | | | | | | |
| | PEs-0.045-35.4×35.4 (tetragon) | | | | 0,08 | | | | | | |
| Shape parameters | A(mm) | 122.6 | 25.0 | 1,0 | 35,4 | 9.9 | 5,7 | 1.7 | 9,9 | 9,9 | 2,5 |
| | B(mm) | 25.5 | 25.0 | 1.0 | 35.4 | 9,9 | 5,7 | 1.7 | 9.9 | 9,9 | 2.5 |
| | C(mm) | 0,1 | 0,1 | 0.1 | 0,045 | 0,05 | 0,4 | 0,1 | 0,05 | 0,05 | 0,15 |
| | C / A | 0.001 | 0,004 | 0,10 | 0,001 | 0.005 | 0,071 | 0,059 | 0,005 | 0.005 | 0.060 |
| | B / A | 0.2 | 1.0 | 1.0 | 1.00 | 1.00 | 1,00 | 1.00 | 1.00 | 1.00 | 1,00 |
| | A / (Pmax/3) | 73.546 | 15.000 | 0.600 | 21.213 | 5,940 | 3.394 | 1,018 | 3.712 | 3.712 | 0.938 |
| Water (mass%) | | 7.2 | 7.2 | 7.2 | 7.3 | 7.2 | 7,2 | 7.2 | 7.2 | 7,2 | 7,2 |
| Crack index | | 0.0124 | 0,0123 | 0.0132 | 0,0136 | 0,0131 | 0,0136 | 0.0147 | 0,0131 | 0,0066 | 0.0100 |
| Crack index ratio | | 67.0 | 66.4 | 71.3 | 73,3 | 70,3 | 73,0 | 79.1 | 70.3 | 35.3 | 53,7 |

* PE: : polyethylene, PP : polypropylene, PEs : polyesters

[Table 2]

| | | Comparative Example 1 | Comparative Example 2 | Comparative Example 3 | Comparative Example 4 |
|---|---|---|---|---|---|
| Refractory raw material (mass%) | | 100 | 100 | 100 | 100 |
| Defect-forming pieces (mass%) | PE-0.15-25.5×25.5 (tetragon) | | | | |
| | PE-0.15-5.1×0.8 (tetragon) | | 0,08 | | |
| | PE-1-6.4×5.1 (tetragon) | | | 0,1 | |
| | PP rope (φ3mm×20mm) | | | | 0,1 |
| Shape parameters | A(mm) | | 5,1 | 6,4 | 20,2 |
| | B(mm) | | 0,8 | 5,1 | 3,0 |
| | C(mm) | | 0.4 | 1 | 3 |
| | C／A | | 0.08 | 0,16 | 0.15 |
| | B／A | | 0,16 | 0,80 | 0,15 |
| | A / (Pmax/3) | | 3.038 | 3.842 | 12.134 |
| Water (mass%) | | 7,2 | 7,2 | 7,2 | 7,2 |
| Crack index | | 0,0186 | 0,0151 | 0,0160 | 0.0193 |
| Crack index ratio | | 100.0 | 81.2 | 86,2 | 104.0 |

* PE: : polyethylene, PP : polypropylene

The material composition of the monolithic refractory body in each of Inventive and Comparative Examples listed in Tables 1 and 2 is an alumina-silica-based composition, and the breakdown of 100% by mass of the refractory raw

material is as follows: 78% by mass of chamotte aggregate, 10% by mass of alumina fine powder, 7% by mass of silica-based ultrafine powder, and 5% by mass of alumina cement. The maximum particle size Pmax of the refractory raw material in each of Inventive Examples 1 to 16 and Comparative Examples 1 to 4 is 5 mm, and the maximum particle size Pmax of the refractory raw material in each of Inventive Examples 17 to 19 is 8 mm. Although not listed in Tables 1 and 2, in each of Inventive and Comparative Examples, a dispersant and organic fibers were added, as additives, at an addition rate of 0.2% by mass and at an addition rate of 0.05 to 0.1% by mass, respectively. On the other hand, no very coarse particles were added.

With regard to the monolithic refractory body in each of the above Inventive and Comparative Examples, the crack index from the installed body (monolithic refractory body) was determined in the following manner.

The installed body subjected to the thermal shock test (this installed body will hereinafter be referred to as "sample") was formed to have a size of 230 × 114 × 65 mm. The sample in each of Inventive and Comparative Examples was prepared by: adding water to the raw material composition for the monolithic refractory body in each of Inventive and Comparative Examples; kneading the resulting mixture by a mixer; casting the resulting kneaded mixture into a mold having a size corresponding to that of the sample; curing the cast mixture at room temperature. After the curing, the sample was demolded, dried at 110°C for 24 h, and then fired at 1000°C for 3 hours. After the firing, a random pattern was applied, using heat-resistant paint, onto a surface of the sample having a size of 230 × 114 mm, and an initial image to be used in image processing was taken. In the thermal shock test, the sample was disposed at an opening of an electric furnace preliminary preheated to a given temperature (in this test: to 1500°C), in such a manner as to allow another surface of the sample having a size of 114 × 65 mm to be heated, and after being held for 10 minutes, the sample was removed from the electric furnace, and subjected to natural cooling. After sufficiently cooling the sample, a post-test image of the sample was taken. The amounts of displacement at a large number of points on the surface of the sample can be measured by processing the initial image and the post-test image, using a digital image correlation method. When strain in the surface of the sample after the thermal shock test is measured by the digital image correlation method, an increase in crack width is detected as an increase in the amount of apparent strain. This technique is capable of measurement at multiple points, e.g., at about 10000 points, wherein the apparent strains at multiple evaluation points on the surface of the sample are added up, and then divided by the number of the evaluation points, thereby obtaining an average strain amount per evaluation point. This value increases as the crack width becomes larger or as a crack length become longer. Since this value can comprehensively represent the degree of cracking in terms of crack width and crack length, the value was used in evaluation as the crack index. The strain is determined by dividing a difference in displacement between an observation point and an adjacent point on the surface of the sample by the initial length. Further, a cutoff value appropriate to the noise level of the test may be provided as needed.

The fact that the crack index determined in the above-mentioned manner becomes smaller means that the occurrence of macrocracks during use can be more effectively suppressed. Tables 1 and 2 show the crack index of the monolithic refractory body in each of Inventive and Comparative Examples, together with the ratio of the crack index of the monolithic refractory body in each of Inventive and Comparative Examples, except for Comparative Example 1, to the crack index of Comparative Example 1, which is a base refractory to which no defect-forming pieces are added, wherein the crack index of Comparative Example 1 is assumed to be 100 (the above ratio will hereinafter be referred to as the "crack index ratio"). In this test, a crack index ratio of 80 or less was regarded as an acceptable level. The crack index ratio is preferably 60 or less, and more preferably 40 or less.

In Table 1, Inventive Examples 1 to 19, in each of which the requirement-compliant sheets were added to 100% by mass of the refractory raw material, within the range of 0.03% by mass to less than 3% by mass with respect to 100% by mass of the refractory raw material, had a crack index ratio of 80 or less, i.e., could obtain a good result. Among them, Inventive Examples 2 to 8, in each of which the addition rate of the requirement-compliant sheets falls within a preferable range, i.e., from 0.1% by mass to 2.5% by mass, had a crack index ratio of 40 or less, i.e., could obtain a particularly good result.

Inventive Example 17, in which the requirement-compliant sheets were added to 100% by mass of the refractory raw material, within the range of 0.03% by mass to less than 3% by mass, with respect to 100% by mass of the refractory raw material, had a crack index ratio of 80 or less, i.e., could obtain a good result, even though Pmax was 8 mm.

Inventive Example 18, in which the requirement-compliant sheets were added to 100% by mass of the refractory raw material, within the range of 0.1% by mass to less than 2.5% by mass, with respect to 100% by mass of the refractory raw material, had a crack index ratio of 40 or less, i.e., could obtain a particularly good result, even though Pmax was 8 mm.

Inventive Example 19, in which the requirement-compliant sheets were added to 100% by mass of the refractory raw material, within the range of 0.1% by mass to less than 2.5% by mass, with respect to 100% by mass of the refractory raw material, and the representative length A is less than 1/3 of Pmax, had a crack index ratio of 80 or less, i.e., could obtain a good result, even though the representative length A is less than 1/3 of Pmax.

In Table 2, Comparative Example 1 is a base refractory to which the above-mentioned defect-forming pieces are not added.

Comparative Example 2 is an example that employed requirement-noncompliant sheets whose shape para-

meter B/A is noncompliant with the requirement of the present invention, and Comparative Example 3 is an example that employed requirement-noncompliant sheets whose shape parameter C/A is noncompliant with the requirement of the present invention. In both of them, the crack index ratio was greater than 80, and did not reach the acceptable level.

Comparative Example 4 is an example in which PP ropes were added as the defect-forming pieces. Due to the PP rope having an elongated shape whose shape parameters B/A and C/A are noncompliant with the requirements of the present invention, the cracking mitigating effect could not be obtained.

Table 3 shows a raw material composition for a monolithic refractory body in each of other Inventive Examples, and a crack index from the thermal shock test of an installed body (monolithic refractory body) of the raw material composition, together with those in other Comparative Examples.

[Table 3]

| | | Inventive Example 20 | Inventive Example 21 | Inventive Example 22 | Inventive Example 23 | Comparative Example 5 | Comparative Example 6 |
|---|---|---|---|---|---|---|---|
| Refractory raw material (mass%) | | 100 | 100 | 100 | 100 | 100 | 100 |
| Defect-forming pieces (mass%) | PE-0.05-25.5×25.5 (tetragon) | 0,1 | | | | | |
| | PE-0.02-25.5×25.5 (tetragon) | | 0,1 | | | | |
| | PS-1-14.1×14.1 (tetragon) | | | 0.1 | | | |
| | PP-0.2-14.1×14.1 (tetragon) | | | | 0,1 | | |
| | PE-1.5-5.7×5.7 (tetragon) | | | | | 0,1 | |
| Shape parameters | A(mm) | 25.5 | 25,5 | 14.1 | 14,1 | 5,7 | |
| | B(mm) | 25.5 | 25.5 | 14.1 | 14.1 | 5.7 | |
| | C(mm) | 0,05 | 0.02 | 1 | 0.2 | 1.5 | |
| | C / A | 0,002 | 0.001 | 0.07 | 0.01 | 0.27 | |
| | B / A | 1,0 | 1.0 | 1.0 | 1.0 | 1,0 | |
| | A / (Pmax/3) | 9,546 | 9,546 | 5,303 | 5,303 | 2,121 | |
| Water (mass%) | | 7.2 | 7.2 | 7.2 | 7.4 | 7.7 | 7.2 |
| Crack index | | 0.01156 | 0.00732 | 0.01114 | 0,00381 | 0.02378 | 0.0290 |
| Crack index ratio | | 39.9 | 25.3 | 38.5 | 13.2 | 82,1 | 100.0 |

* PE: polyethylene, PS: polystyrene, PP: polypropylene

The material composition of the monolithic refractory body in each of Inventive and Comparative Examples listed in Tables 1 and 2 is an alumina-silica-based composition, as mentioned above, whereas the material composition of the monolithic refractory body in each of Inventive and Comparative Examples listed in Table 3 is an alumina-magnesia-based composition, and the breakdown of 100% by mass of the refractory raw material is as follows: 63% by mass of alumina aggregate, 22% by mass of alumina fine powder, 7% by mass of magnesia fine powder, 1% by mass of silica ultrafine powder, and 7% by mass of alumina cement. The maximum particle size Pmax of the refractory raw material is 8 mm. Although not listed in Table 3, in each of Inventive and Comparative Examples, a dispersant and organic fibers were added, as additives, at an addition rate of 0.1% by mass and at an addition rate of 0.2% by mass, respectively,

The crack index was determined in the above-mentioned manner. Further, the crack index ratio was determined on the assumption that the crack index of Comparative Example 6 in Table 3 is 100, wherein Comparative Example 6 is a base refractory to which no defect-forming pieces are added.

In Table 3, Inventive Examples 20 to 23, in each of which the requirement-compliant sheets were added to 100% by mass of the refractory raw material, at an addition rate of 0.1% by mass with respect to 100% by mass of the refractory raw material, had a crack index ratio of 40 or less, i.e., could obtain a good result.

On the other hand, Comparative Example 5 is an example that employed requirement-noncompliant sheets whose shape parameter C/A is noncompliant with the requirement of the present invention. In Comparative Example 5, the crack index ratio was greater than 80, and did not reach the acceptable level.

Table 4 shows a raw material composition for a monolithic refractory body in each of yet other Inventive Examples, and a crack index from the thermal shock test of an installed body (monolithic refractory body) of the raw material composition, together with those in another Comparative Example.

[Table 4]

| | | Inventive Example 24 | Inventive Example 25 | Inventive Example 26 | Comparative Example 7 |
|---|---|---|---|---|---|
| Refractory raw material (mass%) | | 100 | 100 | 100 | 100 |
| Defect-forming pieces (mass%) | PE-0.03-113.1×113.1 (tetragon) | 0,1 | | | |
| | PE-0.02-113.1×113.1 (tetragon) | | 0,1 | | |
| | PE-0.01-113.1×113.1 (tetragon) | | | 0,1 | |
| Shape parameters | A(mm) | 113.1 | 113.1 | 113,1 | |
| | B(mm) | 113.1 | 113.1 | 113,1 | |
| | C(mm) | 0.03 | 0.02 | 0,01 | |
| | C / A | 0,00027 | 0,00018 | 0,00009 | |
| | B / A | 1.0 | 1.0 | 1,0 | |
| | A / (Pmax/3) | 67.9 | 67.9 | 67,9 | |
| Water (mass%) | | 7.4 | 7.4 | 7,4 | 7.4 |
| Crack index | | 0.0071 | 0.0072 | 0.0074 | 0,0194 |
| Crack index ratio | | 36.6 | 37.2 | 38,2 | 100,0 |

* PE: polyethylene

The material composition of the monolithic refractory body in each of Inventive and Comparative Examples listed in Table 4 is an alumina-silica-based composition, and the breakdown of 100% by mass of the refractory raw material is as follows: 70% by mass of chamotte aggregate, 10% by mass of alumina aggregate, 10% by mass of alumina fine powder, 5% by mass of silica-based ultrafine powder, and 5% by mass of alumina cement. The maximum particle size Pmax of the refractory raw material is 5 mm. Although not listed in Table 4, in each of Inventive and Comparative Examples, a dispersant and organic fibers were added, as additives, at an addition rate of 0.2% by mass and at an addition rate of 0.1% by mass, respectively,

The crack index was determined in the above-mentioned manner. Further, the crack index ratio was determined on the assumption that the crack index of Comparative Example 7 in Table 4 is 100, wherein Comparative Example 7 is a base refractory to which no defect-forming pieces are added.

In Table 4, Inventive Examples 24 to 26, in each of which the requirement-compliant sheets were added to 100% by mass of the refractory raw material, at an addition rate of 0.1% by mass with respect to 100% by mass of the refractory raw material, had a crack index ratio of 40 or less, i.e., could obtain a good result.

In Table 4, thin sheets having a thickness C of 0.01 to 0.03 mm, which is less than those in Table 1, were employed. However, it has been confirmed that the cracking mitigating effect can be obtained even if such thin sheets are used.

In each of the monolithic refractory bodies listed in Tables 1-4, the sample subjected to the thermal shock test is obtained through firing under the condition of 1000°C for 3 hours. Thus, the thermally disappearing sheets included in the monolithic refractory body before the firing are almost completely burned out, and void spaces formed as a result of burn-out of the sheets are randomly included in the refractory microstructure.

< Example B: Example of Monolithic Refractory Body (Part 2)>

As for a monolithic refractory body, an evaluation test was conducted using a model tundish simulating an actual furnace. The shell of the model tundish had a rectangular outer shape of about 1000 mm × 800 mm, and a height of about 600 mm, wherein Y-shaped studs similar to those of an actual furnace were attached to an upper portion of the shell in the longitudinal direction thereof. The monolithic refractory body was installed inside the shell by casting using a core. In the

test, a raw material composition for the monolithic refractory body in Inventive Example 20 listed in Table 3 and a raw material composition for the monolithic refractory body in Comparative Example 6, which is an example obtained by removing the defect-forming pieces from the raw material composition for the monolithic refractory body in Inventive Example 20, were lined respectively, to right and left sides of the shell. On the day following the lining, hardening was confirmed, and after curing for several days, the raw material composition was dried under the condition of a maximum temperature of 300 °C. After completion of the drying, the resulting monolithic refractory body was cooled to room temperature, cracks were inspected, and the crack width was measured. As a result, the maximum value of the crack width of the monolithic refractory body in Inventive Example 20 was 63% of that of the monolithic refractory body in Comparative Example 6, which shows that the cracking mitigation effect can be obtained even under the condition of a relatively low temperature which is approximately equal to drying temperatures. A large number of measurement examples of thermogravimetric measurement results for polyethylene used as the defect-forming pieces in Inventive Example 20 are known. In view of them, it is considered that polyethylene does not exhibit a significant weight loss at 300 °C, and thus does not undergo complete burn-out at 300 °C. However, it is considered that a sufficient cracking mitigating effect can be obtained because: the elastic modulus of polyethylene randomly included in the refractory microstructure is lower than those of refractory components, whereby the polyethylene causes stress concentration even at room temperature, to varying degrees, in a manner similar to void spaces; and the polyethylene softens and shrinks due to temperature rise, and thereby becomes more likely to cause stress concentration.

Further, a high-temperature heating test was also conducted. In the high-temperature heating test, an oxygen-propane burner and a lid were placed on the upper portion of the model tundish, and the inside of the model tundish was heated by the burner. The furnace temperature was set at a maximum temperature of 1550°C and held for 5 hours. After stopping the burner, the tundish was cooled to room temperature, and cracks were inspected. Specifically, the crack width was measured in maim areas where cracks were formed in the inner surface of the refractory body, using a crack scale. As a result, the maximum value of the crack width of the monolithic refractory body in Inventive Example 20 was 38% of that of Comparative Example 6, which shows that the cracking mitigating effect can also be obtained under conditions that are brought closer to those of an actual furnace to some extent, in terms of temperature, the mechanical constraint by the shell, and size.

< Example C: Example of Shaped Refractory Body >

Table 5 shows a raw material composition for a shaped refractory body in each of Inventive Examples, and the crack index ratio from the thermal shock test of a shaped refractory body (brick) obtained from the raw material composition, together with those in Comparative Examples.

[Table 5]

| | | Inventive Example 27 | Inventive Example 28 | Inventive Example 29 | Inventive Example 30 | Inventive Example 31 | Inventive Example 32 | Comparative Example 8 | Comparative Example 9 |
|---|---|---|---|---|---|---|---|---|---|
| Refractory raw material (mass%) | | | | | | | | | |
| | Magnesia raw material | 100 | 100 | 100 | 100 | 100 | 95 | 100 | 95 |
| | Graphite | | | | | | 5 | | 5 |
| Defect-forming pieces (mass%) | | | | | | | | | |
| | PE-0.05-7×7 (tetragon) | 0.1 | | | | | 0.1 | | |
| | PE-0.05-10×10 (tetragon) | | 0.1 | | | | | | |
| | PP-0.03-18×18 (tetragon) | | | 0.1 | | | | | |
| | HDPE-0.027-18×18 (tetragon) | | | | 0,1 | | | | |
| | PE-0.15-18×18 (tetragon) | | | | | 0.1 | | | |
| Shape parameters | | | | | | | | | |
| | A(mm) | 7 | 10 | 18 | 18 | 18 | 7 | | |
| | B(mm) | 7 | 10 | 18 | 18 | 18 | 7 | | |
| | C(mm) | 0.05 | 0,05 | 0.03 | 0,027 | 0,15 | 0,05 | | |
| | C /A | 0,0071 | 0.0050 | 0,0017 | 0,0015 | 0.0083 | 0,0071 | | |
| | B /A | 1 | 1 | 1 | 1 | 1 | 1 | | |
| | A / (Pmax/3) | 4.2 | 6 | 10,8 | 10,8 | 10,8 | 4,2 | | |
| Crack index ratio | | 35,1 | 43,15 | 63,21 | 52,88 | 40,63 | 36,88 | 100 | 100 |

* PE: poly-ethylene, PP: polypropylene, HDPE: high-density polyethylene

In Table 5, the material composition of the shaped refractory body in each of Inventive Examples 27 to 31 and Comparative Example 8 is a magnesia-based composition, and the material composition of the shaped refractory body in each of Inventive Example 32 and Comparative Example 9 is a magnesia-carbon-based composition. The maximum particle size Pmax of the refractory raw material is 5 mm. A sample (shaped refractory body) for the thermal shock test was obtained by: adding phenol resin as an organic binder in a moderate amount to the raw material composition in each of Inventive and Comparative Examples; kneading the resulting mixture; forming the resulting kneaded mixture into a shape having a size of 230 × 114 × 65 mm by oil press; and then subjecting the resulting shaped body to heat treatment at a maximum temperature of 250°C for a holding time of 5 hours. The crack index ratio from the thermal shock test was determined in the above-mentioned manner. Specifically, the crack index ratio of the magnesia-based shaped refractory body in each of Inventive Examples 27 to 31 was determined on the assumption that the crack index of Comparative Example 8 is 100, wherein Comparative Example 8 is a magnesia-based base refractory to which no defect-forming pieces are added, and the crack index ratio of the magnesia-carbon-based shaped refractory body in Inventive Example 32 was determined on the assumption that the crack index of Comparative Example 9 is 100, wherein Comparative Example 9 is a magnesia-carbon-based base refractory to which no defect-forming pieces are added.

Both of the magnesia-based shaped refractory body in each of Inventive Examples 27 to 31 and the magnesia-carbon-based shaped refractory body in Inventive Example 32, had a crack index ratio of 80 or less, i.e. could obtain a good result.

Table 6 shows a raw material composition for a shaped refractory body in each of other Inventive Examples, and an elastic modulus reduction index from a thermal shock test of a shaped refractory body (brick) obtained from the raw material composition, together with those in Comparative Examples.

[Table 6]

| | | Inventive Example 33 | Inventive Example 34 | Inventive Example 35 | Comparative Example 10 | Comparative Example 11 | Comparative Example 12 |
|---|---|---|---|---|---|---|---|
| Refractory raw material (mass% | | | | | | | |
| | Magnesia raw material | 90 | 85 | 80 | 90 | 85 | 80 |
| | Graphite | 10 | 15 | 20 | 10 | 15 | 20 |
| Defect-forming pieces (mass%) | | | | | | | |
| | PE-0.05-7×7 (tetragon) | 0,1 | 0,1 | 0,1 | | | |
| Shape parameters | | | | | | | |
| | A(mm) | 7 | 7 | 7 | | | |
| | B(mm) | 7 | 7 | 7 | | | |
| | C(mm) | 0.05 | 0.05 | 0,05 | | | |
| | C / A | 0,0071 | 0,0071 | 0,0071 | | | |
| | B / A | 1 | 1 | 1 | | | |
| | A / (Pmax/3) | 4,2 | 4,2 | 4,2 | | | |
| Elastic modulus reduction index | | 79 | 76 | 82 | 100 | 100 | 100 |
| * PE: polyethylene | | | | | | | |

The material composition of the shaped refractory body in each of Inventive and Comparative Examples listed in Table 6 is a magnesia-carbon-based composition, wherein the content rate of graphite is varied among Inventive Examples and among Comparative Examples. The maximum particle size Pmax of the refractory raw material is 5 mm

The magnesia-carbon-based shaped refractory bodies in Table 6 have a graphite content rate greater than that of the magnesia-carbon-based shaped refractory bodies in Table 5, and exhibit thermal shock resistance superior to that of the magnesia-carbon-based shaped refractory bodies in Table 5. Thus, with regard to the magnesia-carbon-based

shaped refractory bodies in Table 6, a thermal shock test was conducted in the following manner to determine the elastic modulus reduction index. Specifically, the thermal shock test was conducted by immersing a sample having a size of 40 × 40 × 190 mm in molten iron at 1600°C for 90 seconds, and then repeatedly subjecting the sample to thermal shock by water cooling for 30 seconds, three times. Then, the elastic modulus reduction ratio was determined from the elastic moduli measured before and after the test. Further, the ratio of the elastic modulus reduction ratio in each of Inventive Examples to that of a corresponding one of Comparative Examples, which is a corresponding base refractory, was calculated and defined as the elastic modulus reduction index. As this index becomes smaller, a reduction in elastic modulus becomes less likely to occur as compared to the base refractory, which means that the effect of improving thermal shock resistance becomes higher. The correspondence relation between Inventive Examples and Comparative Examples as base refractories is as follows. According to the graphite content rate, the base refractory of Inventive Example 33 is Comparative Example 10; the base refractory of Inventive Example 34 is Comparative Example 11; and the base refractory of Inventive Example 35 is Comparative Example 12.

From Table 6, it can be seen that Inventive Examples 33 to 35 is improved in terms of thermal shock resistance, as compared to the respective base refractories (Comparative Examples 10 to 12). Specifically, it was confirmed that the thermal shock resistance improving effect, i.e., the cracking mitigating effect, can also be obtained in magnesia-carbon-based shaped refractory body (brick) having a high graphite content rate.

In each of the shaped refractory bodies listed in Tables 5 and 6, the sample subjected to the thermal shock test is obtained through heat treatment at a maximum temperature of 250°C for a holding time of 5 hours. As shown in Tables, the material of the sheets is any one of polyethylene, polypropylene, and high-density polyethylene, wherein it has been confirmed that from the results of thermogravimetric measurement, these materials do not exhibit a significant weight loss at 250°C. Thus, the sheets included in the sample before heating are randomly included in the refractory microstructure almost without being burned out.

Table 7 shows a raw material composition for a shaped refractory body in each of Inventive Examples, and the crack index ratio from the thermal shock test of a shaped refractory body (brick) obtained from the raw material composition, together with those in Comparative Examples.

[Table 7]

| | | Inventive Example 36 | Inventive Example 37 | Inventive Example 38 | Comparative Example 13 | Comparative Example 14 | Comparative Example 15 |
|---|---|---|---|---|---|---|---|
| Refractory raw material (mass%) | | | | | | | |
| | Chamotte aggregate | | 29 | 68 | | 29 | 68 |
| | Alumina aggregate | 75 | 43 | | 75 | 43 | |
| | Alumina fine powder | 25 | 28 | 32 | 25 | 28 | 32 |
| Defect-forming pieces (mass%) | | | | | | | |
| | PE-0.05-7×7 (tetragon) | 0,1 | 0,1 | 0,1 | | | |
| Shape parameters | | | | | | | |
| | A(mm) | 7 | 7 | 7 | | | |
| | B(mm) | 7 | 7 | 7 | | | |
| | C(mm) | 0,05 | 0,05 | 0,05 | | | |
| | C / A | 0,0071 | 0.0071 | 0,0071 | | | |
| | B / A | 1 | 1 | 1 | | | |
| | A / (Pmax/3) | 7 | 7 | 7 | | | |

(continued)

| Shape parameters | | | | | | |
|---|---|---|---|---|---|---|
| Crack index ratio | 52.54 | 59.96 | 52,25 | 100 | 100 | 100 |
| * PE: polyethylene | | | | | | |

The material composition of the shaped refractory body in each of Inventive and Comparative Examples is an alumina-based or alumina-silica-based composition. The maximum particle size Pmax of the refractory raw material is 3 mm. A sample (shaped refractory body) for the thermal shock test was obtained by: forming the raw material composition into a shape having a size of 230 × 114 × 65 mm by oil press; and then subjecting the resulting shaped body to firing at 1600°C for 5 hours. The crack index ratio from the thermal shock test was determined in the above-mentioned manner. Specifically, the crack index ratio for Inventive Example 36 was determined on the assumption that the crack index of Comparative Example 13 is 100, wherein Comparative Example 13 is a base refractory to which no defect-forming pieces are added, and the crack index ratio for Inventive Example 37 was determined on the assumption that the crack index of Comparative Example 14 is 100, wherein Comparative Example 14 is a base refractory to which no defect-forming pieces are added. Further, the crack index ratio for Inventive Example 38 was determined on the assumption that the crack index of Comparative Example 15 is 100, wherein Comparative Example 15 is a base refractory to which no defect-forming pieces are added.

All the inventive Examples 36-38 had a crack index ratio of 60 or less, i.e., could have good result. That is, it has been confirmed that the cracking mitigating effect can also be obtained in shaped refractory bodies having different material compositions.

In each of the shaped refractory bodied in Table 7, the sample subjected to the thermal shock test is obtained through firing at 1600 °C for 5 hours. Thus, the thermally disappearing sheets included in the shaped body before the firing are almost completely burned out, and void spaces formed as a result of burn-out of the sheets are randomly included in the refractory microstructure.

## Claims

1. A refractory body in which thermally disappearing sheets and/or void spaces formed as a result of burn-out of the sheets are randomly included in a refractory microstructure primarily composes of a refractory raw material, wherein each of the sheets satisfies the following conditions: $C \leq 1$ mm; $C/A \leq 0.1$; and $0.2 \leq B/A \leq 1.0$, where: A denotes a representative length of the sheet; B denotes a maximum length as measured within a plane of the sheet in a direction orthogonal to a direction along which the representative length A is defined; and C denotes a thickness of the sheet.

2. The refractory body as claimed in claim 1, wherein the representative length A is greater than 1/3 of a maximum particle size of the refractory raw material.

3. A method of producing a refractory body, the method comprising a step of adding thermally disappearing sheets to a refractory raw material mixture primarily composed of a refractory raw material, and mixing them together, wherein each of the sheets satisfies the following conditions: $C \leq 1$ mm; $C/A \leq 0.1$; and $0.2 \leq B/A \leq 1.0$, where: A denotes a representative length of the sheet; B denotes a maximum length as measured within a plane of the sheet in a direction orthogonal to a direction along which the representative length A is defined; and C denotes a thickness of the sheet.

4. The method as claimed in claim 3, wherein the representative length A is greater than 1/3 of a maximum particle size of the refractory raw material.

【Fig.1】

A
B
(a)
A
B
(b)
A
B
(c)
A
B
(d)
A
B
(e)

## INTERNATIONAL SEARCH REPORT

International application No. **PCT/JP2024/039349**

**A. CLASSIFICATION OF SUBJECT MATTER**

***C04B 35/66***(2006.01)i; ***C04B 38/06***(2006.01)i; ***F27D 1/00***(2006.01)i
FI: C04B35/66; C04B38/06 B; F27D1/00 D

According to International Patent Classification (IPC) or to both national classification and IPC

**B. FIELDS SEARCHED**

Minimum documentation searched (classification system followed by classification symbols)

C04B35/00 - 35/84; C04B38/06; F27D1/00 - 1/18; B22D41/00 - 41/62

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 58-151359 A (HARIMA TAIKA RENGA KK) 08 September 1983 (1983-09-08)<br>claims, page 3, lower left column - page 4 | 1, 3<br>2, 4 |
| A | WO 2012/081373 A1 (KROSAKIHARIMA CORPORATION) 21 June 2012 (2012-06-21)<br>entire text, all drawings | 1-4 |
| A | WO 2011/125536 A1 (KROSAKIHARIMA CORPORATION) 13 October 2011 (2011-10-13)<br>entire text, all drawings | 1-4 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search: **22 January 2025**

Date of mailing of the international search report: **04 February 2025**

Name and mailing address of the ISA/JP

**Japan Patent Office (ISA/JP)**
**3-4-3 Kasumigaseki, Chiyoda-ku, Tokyo 100-8915**
**Japan**

Authorized officer

Telephone No.

Form PCT/ISA/210 (second sheet) (July 2022)

**INTERNATIONAL SEARCH REPORT**
**Information on patent family members**

International application No.
**PCT/JP2024/039349**

| Patent document cited in search report | Publication date (day/month/year) | Patent family member(s) | Publication date (day/month/year) |
|---|---|---|---|
| JP 58-151359 A | 08 September 1983 | (Family: none) | |
| WO 2012/081373 A1 | 21 June 2012 | (Family: none) | |
| WO 2011/125536 A1 | 13 October 2011 | CN 102858712 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006225195 A
- JP 62021752 B